# EUROPEAN PATENT APPLICATION

(11) **EP 4 568 032 A1**
(43) Date of publication of application: **11.06.2025**
(21) Application number: 24307033.1
(22) Date of filing: 05.12.2024
(51) Int. Cl.: H02G 1/12

(54) **CABLE STRIPPER**

(30) Priority: 08.12.2023 SE 2351403
(71) Applicant: Nexans, 92400 Courbevoie (FR)
(72) Inventor: NORMAN, Mikael, 92400 Courbevoie (FR)
(74) Representative: Cabinet Boettcher

(57) **Abstract**

A stripping tool (100) is provided. The stripping tool (100) comprises a support structure (101). A roller (102) is arranged along an axis (A) in the support structure (101) through the center of the roller (102). The roller (102) comprises a circumferential roller surface (103) transversally to the axis (A) for guiding a cable along its longitudinal extension. A cutting element (104) is arranged on a cutting element arm (106) pivotably connected to the support structure (101). The cutting element (106) being arranged perpendicular to the first axis (A), such that a sheath on the cable may be cut along the longitudinal extension as the cable is displaced along the direction of its longitudinal extension.

## Description

### Technical Field

The present invention relates to a cable stripper, and more specifically to a stripping tool for a tubular element, such as an electrical cable, for removing the outer sheath or another layer of a cable or tube.

### Background

Electrical cables are used vastly, such as connecting equipment, transmitting power, controlling installation etc. Electrical cables are hence indispensable components in power systems. When connecting a cable to an equipment or another cable, it is usually necessary to strip off an insulating outer sheath at the end of the cable to reveal an electrically conductive core, which is to be connected to another electrically conductive component, such as an equipment or cable. To strip the cable of this insulating outer sheath personnel normally use knifes. Hence, there is a risk that the installer will cut themselves on the knife blade.

There is therefore a need for a solution that eliminates or at least reduces the risk of hazardous use of knifes when electrically installing equipment.

### Summary

Accordingly, the present invention preferably seeks to mitigate, alleviate or eliminate one or more of the above-identified deficiencies in the art and disadvantages singly or in any combination and solves at least the above mentioned problems by providing an improved stripping tool for a tubular element, such as an electrical cable, for removing the outer sheath or another layer of the electrical cable.

For this purpose a stripping tool is provided according to a first aspect, said stripping tool comprising: a support structure, wherein a roller is arranged along an axis in the support structure through the center of the roller, wherein the roller comprises a circumferential roller surface transversally to the axis for guiding a cable along its longitudinal extension; and a cutting element arranged on a cutting element arm pivotably connected to the support structure, the cutting element being arranged perpendicular to the first axis, such that a sheath on the cable may be cut along the longitudinal extension as the cable is displaced along the direction of its longitudinal extension, wherein the cutting element arm is pivotable around a pivot axis, said pivot axis being perpendicular to the axis, such that cutting element may be pivoted from an open position, in which open position the cutting element extends away from the roller surface, to a closed position, in which closed position the cutting element extends towards the roller surface. A method for operating such stripping tool is also provided.

According to an embodiment, the cutting element is aligned with the roller surface when the cutting element is in the open position. In doing so, the cable is disposed between the roller surface and the cutting element when the cutting element is in open position.

According to an embodiment, the roller surface defines a central axis located at a central position of the roller surface and perpendicular to the axis around which the roller is able to rotate. The cutting element is aligned with the central axis when the cutting element is in the open position.

According to an embodiment, the roller surface defines a cavity for receiving the cable. The cutting element is aligned with said cavity when the cutting element is in the open position. The cavity is preferably configured to maintain the cable in a cutting position within the cavity. Hence, the cavity is preferably configured to limit the displacement of the cable along the axis around which the roller is able to rotate.

According to one embodiment of the first aspect the cutting element is a cutting blade.

According to one embodiment of the first aspect the roller is rotatable around the axis.

According to one embodiment of the first aspect the roller surface is provided with a guiding groove for guiding a cable transversally to the axis.

According to one embodiment of the first aspect the cutting element arm is provided with a locking flange, which may lock to the support structure on the side of the roller surface opposite the pivot axis in the locked position, such that the cutting element may be in locked position in relation to the roller surface.

According to one embodiment of the first aspect the locking flange interacts with a locking groove on the support structure in the closed position.

According to one embodiment a method for stripping a cable or tube of an outer sheath with a stripping tool according to above is provided, comprising the steps of: placing a cable or tube on the roller surface, such that the cutting element contacts the sheath; and displacing the cable or tube in a direction along the longitudinal extension of the cable or tube, such that the sheath is cut by the cutting element along the longitudinal extension of the cable or tube.

According to a second aspect a stripping tool is provided, said stripping tool comprising: a support structure, wherein a roller is arranged along an axis in the support structure through the center of the roller, wherein the roller comprises a circumferential roller surface transversally to the axis for guiding a cable along its longitudinal extension; and a cutting element is arranged on the support structure perpendicular to the first axis, such that a sheath on the cable may be cut along the longitudinal extension as the cable is displaced along the direction of its longitudinal extension, wherein the cutting element is fixed in relation to the support structure.

According to one embodiment of the second aspect the cutting element is a cutting blade.

According to one embodiment of the second aspect the roller is rotatable around the axis.

According to one embodiment of the second aspect the roller surface is provided with a guiding groove for guiding a cable transversally to the axis.

According to one embodiment of the second aspect the roller is arranged on a roller arm on the support structure and the cutting element is arranged on a cutting element arm.

According to one embodiment of the second aspect the roller arm and cutting element arm are in a fixed relationship in relation to each other, and the cutting element extends in a plane intersecting the roller surface.

According to one embodiment of the second aspect the stripping tool comprises a handle.

According to one embodiment of the second aspect the handle extends transversally to the axis.

### Brief Description of Drawings

These and other aspects, features and advantages of which the invention is capable of will be apparent and elucidated from the following description of embodiments of the present invention, reference being made to the accompanying drawings, in which
Fig. 1 is a perspective view of one embodiment of the present invention, in open position;
Fig. 2 is a side view of one embodiment of the present invention, in open position;
Fig. 3 is a perspective view of one embodiment of the present invention, in closed position;
Fig. 4 is a side view of one embodiment of the present invention, in closed position;
Fig. 5 is a perspective view of one embodiment of the present invention;
Fig. 6 is a back view of one embodiment of the present invention; and
Fig. 7 is a side view of one embodiment of the present invention.

### Detailed Description

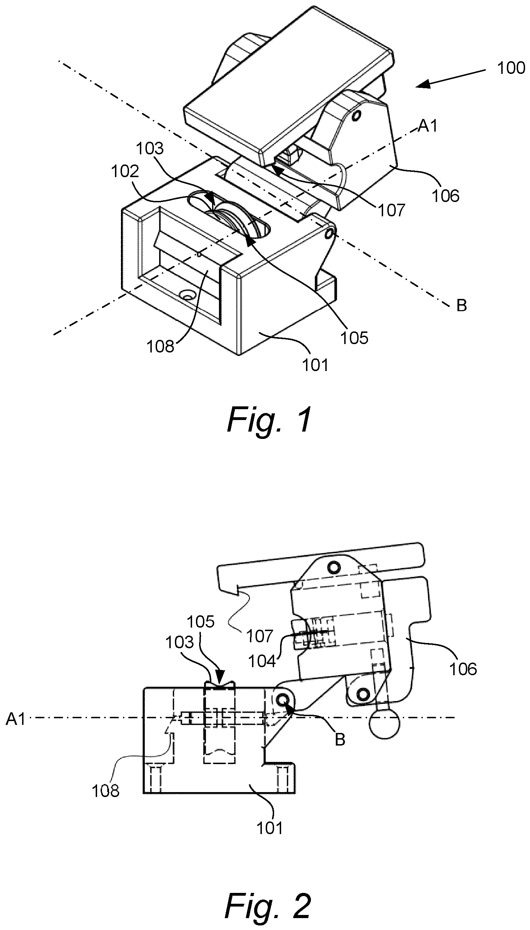

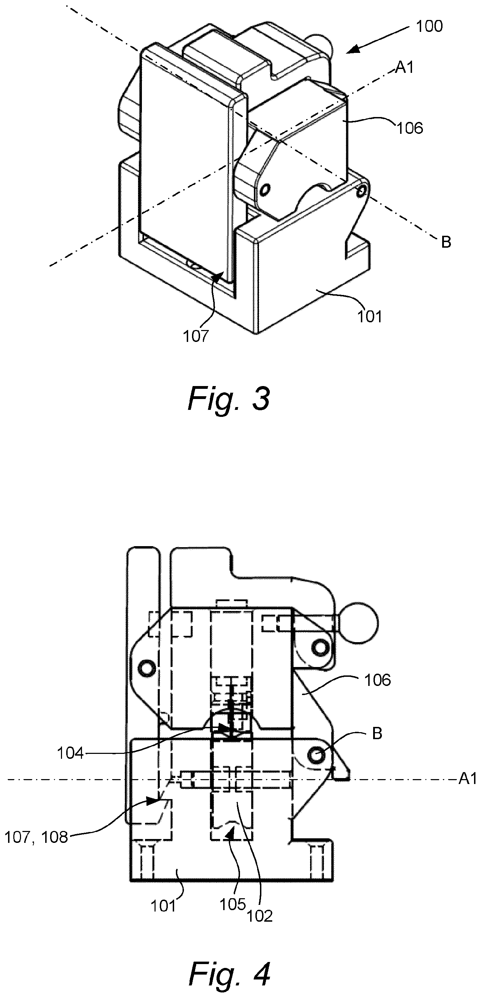

Figs. 1 to 4 disclose a stripping tool 100, according to one embodiment of the present invention. The stripping tool 100 may be mounted on a fixed surface or equipment. The stripping tool 100 comprises a support structure 101. The support structure 101 constitutes a base on which the active components are suspended or arranged. A roller 102 is arranged on the support structure. The roller 102 may be gliding or rotating roller, such as a wheel. The roller 102 is arranged on the support structure 101 along an axis A, such as a central axis A passing through the center of the roller 102. When the roller 102 is a rotatable roller 102, the roller 102 rotates around the axis A. The roller 102 comprises a circumferential roller surface 103. The roller surface 203 extends circumferentially/around the roller 102, i.e. transversally to the axis A. The roller surface 103 is configured to guide a cable or a tube in a direction of the longitudinal extension of the cable or tube. A cutting element 104 is arranged on the support structure 101. The cutting element 104 is arranged perpendicular to the axis A. In this way, a sheath on the cable may be cut along the longitudinal extension when the cable is displaced along the direction of its longitudinal extension. The cutting element 104 may be a cutting blade, a cutting pin, or a circular cutting element which is either fixed or rotatable. When the cutting element 104 is a cutting blade, the cutting blade 104 should extend in a plane transversal to the axis A, and intersecting the roller surface 103, such that it may cut a sheath on a cable or tube that is displaced by the roller 102.

The roller surface 103 may be provided with a guiding groove 105, for guiding the cable or tube transversally to the axis A, such that the cable or tube may be displaced in a direction along the longitudinal extension thereof. The guiding groove may be U or V shaped, such that the cable or tube may rest in the groove 105 and preventing lateral movement of the cable or tube as it rolls over the roller 102.

The roller 102 is arranged on the support structure 101, and the cutting element 104 is arranged on a cutting element arm 106 pivotably connected to the support structure 101. The cutting element arm 106 is pivotable around a pivot axis B. The pivot axis B is perpendicular to the axis A. In this way, the cutting element 104 may be pivoted from an open position, in which open position the cutting element 104 extends away from the roller surface 103, to a closed position, in which closed position the cutting element 104 extends towards the roller surface 103. Hence, the stripping tool 100 may be opened by pivoting the cutting element arm 106 in a first direction around the axis B into the open position. Thereafter, a cable or tube may be placed on the roller 102, such as in the guiding groove 105. Then, the cutting element arm 106 is pivoted into the opposite direction to the first direction to close the stripping tool 100 with a cable or tube arranged there through. In this position, the cutting element 104 engages with the outer surface of the cable or tube, such that it interacts with a sheath on the cable or tube. As the cable or tube is displaced in a direction of the longitudinal extension of the cable or tube, the cutting element 104 will cut open the sheath on the cable or tube. The cable or tube is advanced in the direction of its longitudinal extension until the sheath on the cable or tube is cut to a desired length. Thereafter, the cutting element arm 106 is again pivoted in the first direction, into the open position, such that the cable or tube may be released from the stripping tool 100. Then, the cable or tube may be taken out of the stripping tool.

The stripping tool 100 is provided with a locking flange 107. The locking flange 107 is a arranged on the cutting element arm 106. When the cutting element arm 106 is pivoted into the closed position, the locking flange 107 may interact with a locking groove 108 on the support structure 101. In this way, the locking flange 107 can lock to the support structure 101 on the side of the roller surface 103 opposite the pivot axis B in the locked position, such that the cutting element 104 may be in locked position in relation to the roller surface 103.

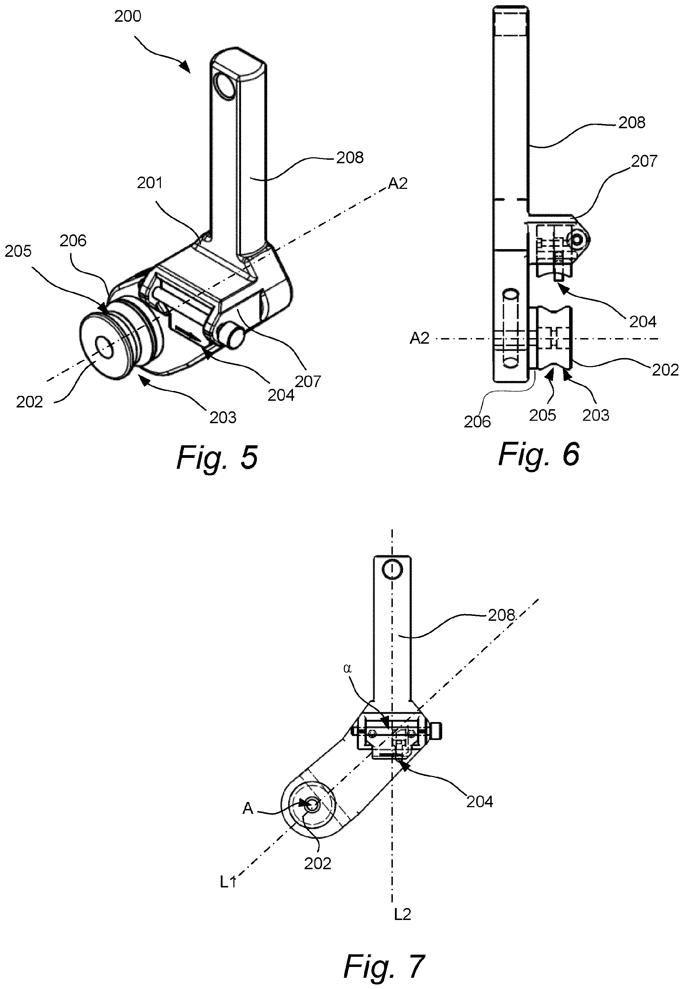

Figs. 5 to 7 disclose a stripping tool 200, according to another aspect of the present invention. In this embodiment the stripping tool 200 may be handheld. The stripping tool 200 comprises a support structure 201. The support structure 201 constitutes a base on which the active components are suspended or arranged. The support structure 201 extends along a longitudinal axis L1. A roller 202 is arranged on the support structure. The roller 202 is arranged at a first end of the support structure 201. The roller 202 may be gliding or rotating roller, such as a wheel. The roller 202 is arranged on the support structure 201 along an axis A2, such as a central axis A2 passing through the center of the roller 202. When the roller 202 is a rotatable roller 202, the roller 202 rotates around the axis A2. The roller 202 comprises a circumferential roller surface 203. The roller surface 203 extends circumferentially/around the roller 202, i.e. transversally to the axis A2. The roller surface 203 is configured to guide a cable or a tube in a direction of the longitudinal extension of the cable or tube. A cutting element 204 is arranged on the support structure 201. The cutting element 204 is arranged perpendicular to the axis A2. In this way, a sheath on the cable may be cut along the longitudinal extension when the cable is displaced along the direction of its longitudinal extension. The cutting element 204 may be a cutting blade or a cutting pin. When the cutting element 204 is a cutting blade, the cutting blade should extend in a plane transversal to the axis A2, and intersecting the roller surface 203, such that it may cut a sheath on a cable or tube that is displaced by the roller 202. The cutting blade 204 is preferably fixed in relation to the support structure 201, which means that it does not rotate or translate in relation to the support structure 201.

The roller surface 203 may be provided with a guiding groove 205, for guiding the cable or tube transversally to the axis A2, such that the cable or tube may be displaced in a direction along the longitudinal extension thereof. The guiding groove may be U or V shaped, such that the cable or tube may rest in the groove 205 and preventing lateral movement of the cable or tube as it rolls over the roller 202.

The roller 202 is arranged on a roller arm 206 on the support structure 201, and the cutting element 204 is arranged on a cutting element arm 207 on the support structure 201. The roller arm 206 and cutting element arm 207 are in a fixed relationship in relation to each other, and the cutting element 204 extends in a plane intersecting the roller surface 203. A handle 208 is arranged on the support structure 201. The handle extends along a longitudinal axis L2. L2 is transversal to the axis A2. Additionally, axis L2 is angled in relation to axis L1 with an angle α. Angle α is greater than 90 degrees, preferably between 110 to 160 degrees, and more preferably between 130 to 150 degrees.

In the claims, the term "comprises/comprising" does not exclude the presence of other elements or steps. Additionally, although individual features may be included in different claims, these may possibly advantageously be combined, and the inclusion in different claims does not imply that a combination of features is not feasible and/or advantageous. In addition, singular references do not exclude a plurality. The terms "a", "an", "first", "second" etc. do not preclude a plurality. Reference signs in the claims are provided merely as a clarifying example and shall not be construed as limiting the scope of the claims in any way.

## Claims

1. A stripping tool (100) comprising: a support structure (101), wherein a roller (102) is arranged along an axis (A1) in the support structure (101) through the center of the roller (102), wherein the roller (102) comprises a circumferential roller surface (103) transversally to the axis (A1) for guiding a cable along its longitudinal extension; and a cutting element (104) arranged on a cutting element arm (106) pivotably connected to the support structure (101), the cutting element (104) being arranged perpendicular to the first axis (A1), such that a sheath on the cable may be cut along the longitudinal extension as the cable is displaced along the direction of its longitudinal extension, wherein the cutting element arm (106) is pivotable around a pivot axis (B), said pivot axis (B) being perpendicular to the axis (A1), such that cutting element (104) may be pivoted from an open position, in which open position the cutting element (104) extends away from the roller surface (103), to a closed position, in which closed position the cutting element (104) extends towards the roller surface (103).

2. The stripping tool (100) according to claim 1, wherein the cutting element (104) is a cutting blade (104).

3. The stripping tool (100) according to claim 1 or 2, wherein the roller (102) is rotatable around the axis (A1).

4. The stripping tool (100) according to one of the preceding claims, wherein the roller surface (103) is provided with a guiding groove (105) for guiding a cable transversally to the axis (A1).

5. The stripping tool (100) according to one of the preceding claims, wherein the cutting element arm (106) is provided with a locking flange (107), which may lock to the support structure (101) on the side of the roller surface (103) opposite the pivot axis (B) in the locked position, such that the cutting element (104) may be in locked position in relation to the roller surface (103).

6. The stripping tool (100) according to claim 5, wherein the locking flange (107) interacts with a locking groove (108) on the support structure (101) in the closed position.

7. A method for stripping a cable or tube of an outer sheath with a stripping tool according to any one of claims 1 to 6, comprising the steps of:
placing a cable or tube on the roller surface (103), such that the cutting element (104) contacts the sheath; and
displacing the cable or tube in a direction along the longitudinal extension of the cable or tube, such that the sheath is cut by the cutting element (104) along the longitudinal extension of the cable or tube.

8. A stripping tool (200) comprising: a support structure (201), wherein a roller (202) is arranged along an axis (A2) in the support structure (201) through the center of the roller (202), wherein the roller (202) comprises a circumferential roller surface (203) transversally to the axis (A2) for guiding a cable along its longitudinal extension; and a cutting element (204) is arranged on the support structure (201) perpendicular to the first axis (A2), such that a sheath on the cable may be cut along the longitudinal extension as the cable is displaced along the direction of its longitudinal extension, wherein the cutting element (204) is fixed in relation to the support structure (201).

9. The stripping tool (200) according to claim 8, wherein the cutting element (204) is a cutting blade (204).

10. The stripping tool (200) according to claim 8 or 9, wherein the roller (202) is rotatable around the axis (A2).

11. The stripping tool (200) according to one of claims 8 to 10, wherein the roller surface (203) is provided with a guiding groove (205) for guiding a cable transversally to the axis (A2).

12. The stripping tool (200) according one of claims 8 to 11, wherein the roller (202) is arranged on a roller arm (206) on the support structure (201) and the cutting element (204) is arranged on a cutting element arm (207).

13. The stripping tool (200) according to claim 12, wherein said roller arm (206) and cutting element arm (207) are in a fixed relationship in relation to each other, and the cutting element (204) extends in a plane intersecting the roller surface (203).

14. The stripping tool (200) according to claim 13, comprising a handle (208).

15. The stripping tool (200) according to claim 14, wherein the handle (208) extends transversally to the axis (A2).
